Europäisches Patentamt

European Patent Office

Office européen des brevets

(19)

(11) EP 0 553 026 B1

(12)

# FASCICULE DE BREVET EUROPEEN

(45) Date de publication et mention de la délivrance du brevet:
**09.10.1996 Bulletin 1996/41**

(51) Int Cl.$^6$: **G05B 19/05**

(21) Numéro de dépôt: **93400138.9**

(22) Date de dépôt: **21.01.1993**

(54) **Procédé de simulation d'un processus industriel et utilisation pour tester le fonctionnement d'un automatisme**

Verfahren zur Simulation eines industriellen Prozesses und Verwendung zum Testen der Funktionsfähigkeit eines automatischen Systems

Simulation procedure for an industrial process and its use for testing the operation of an automatic system

(84) Etats contractants désignés:
**AT BE CH DE DK ES GB GR IT LI LU MC NL PT SE**

(30) Priorité: **24.01.1992 FR 9201137**

(43) Date de publication de la demande:
**28.07.1993 Bulletin 1993/30**

(73) Titulaire: **PROSYST S.A.**
**F-59300 Valenciennes (FR)**

(72) Inventeurs:
• **Willaeys, Didier**
**F-59400 Cambrai (FR)**
• **Asse, Abdallah**
**F-59300 Valenciennes (FR)**

(74) Mandataire: **Descourtieux, Philippe et al**
**Cabinet Beau de Loménie**
**158, rue de l'Université**
**75340 Paris Cédex 07 (FR)**

(56) Documents cités:
• **ELEKTROTECHNIK vol. 72, no. 11, 19 Novembre 1990, WüRZBURG,DE pages 26 - 33 , XP000175767 M.HOLDER 'Testen ohne einzubauen'**
• **EDN-ELECRTRICAL DESIGN NEWS vol. 33, no. 24, 24 Novembre 1988, NEWTON,MA,USA pages 106 - 116 , XP000111317 D.CONNER 'Analog simulation'**

## Description

La présente invention a pour objet principal un procédé de simulation d'un processus industriel piloté par un automatisme de commande. La complexité croissante des processus mis en oeuvre dans les installations industrielles actuelles, implique une complexité croissante des automatismes de commande qui les pilotent.

Aussi est-il devenu impératif de tester le bon fonctionnement de tout automatisme de commande qui est soit à logique cablée, soit à logique programmée du type contrôleur programmable industriel, avant la mise en service de l'installation industrielle qu'il contrôle, afin d'éviter des coûts importants de mise au point sur site.

Un procédé connu pour tester la validité d'un automatisme de commande, consiste à relier audit automatisme un simulateur qui reproduit fidèlement le processus de l'installation industrielle, de telle sorte que les entrées de l'un communiquent avec les sorties de l'autre et vice et versa

Le procédé de simulation de processus qui est utilisé par de tels simulateurs, qui sont la plupart du temps des systèmes basés sur des moyens informatiques, consiste à gérer des temporisations qui sont déclenchées à la réception par le simulateur d'une commande émise par l'automatisme. Chaque fois qu'une temporisation touche à sa fin, ce qui correspond dans la réalité au changement d'état d'un capteur de l'installation industrielle, le simulateur rend compte de l'état du processus audit automatisme. Ainsi, la simulation du processus industriel se fait en temps réel.

L'inconvénient majeur d'un tel procédé de simulation réside dans la perte de temps consacrée à attendre la fin d'une temporisation ; sachant que plus le processus simulé est lent, plus cette perte de temps est importante.

Le but principal de la présente invention est donc de proposer un procédé de simulation d'un processus, qui peut être mis en oeuvre automatiquement, et qui élimine ces temps d'attente, tout en tenant compte du temps réel de l'évolution du processus. Cet objectif est atteint par un procédé de simulation comportant des caractéristiques selon la revendication 1.

Un premier mode particulier de réalisation du procédé de simulation consiste à décomposer l'étape a précitée en la succession d'étapes suivantes :

j) définir les capteurs qui contrôlent chaque grandeur physique ,
jj) associer à chaque capteur un signal d'état,
jjj) décomposer la plage de variation de chaque grandeur physique $P_i$ en une succession de secteurs contigus ; chaque secteur $S_{i,j}$ correspondant à une plage de variation de la grandeur physique $P_i$ pendant laquelle aucun capteur contrôlant la grandeur $P_i$ ne change d'état,
jjjj) associer à chaque secteur $S_{i,j}$ une borne inférieure, une borne supérieure, et les états des capteurs contrôlant la grandeur $P_i$.

Un deuxième mode particulier de réalisation du procédé de simulation consiste à décomposer l'étape b précitée, en la succession d'étapes suivantes :

j) associer à chaque grandeur physique $P_i$ les signaux de commande qui font varier la valeur de la grandeur $P_i$,
jj) associer à chaque signal de commande défini en (j), une vitesse de variation de la grandeur $P_i$ en fonction de l'état binaire dudit signal de commande.

D'autre part de façon plus particulière, à partir des deux modes particuliers de réalisation précédents, les étapes c à i du procédé de simulation peuvent être effectuées automatiquement à l'aide de la succession des étapes suivantes :

1) choisir une valeur pour le temps d'attente ,
2) choisir pour chaque grandeur physique $P_i$ un secteur courant $S_i$, parmi les secteurs qui composent la plage de variation de la grandeur physique $P_i$ et initialiser une valeur $p_i$ qui est comprise entre les bornes du secteur courant $S_i$,
3) calculer pour chaque grandeur physique $P_i$ une vitesse de variation $V_i$ à partir des vitesses de variation associées conformément à l'étape b (jj), à chaque signal de commande en fonction de son état,
4) déterminer pour chaque grandeur physique $P_i$, l'intervalle de temps $\Delta t_i$ en fonction des bornes du secteur courant $S_i$, de la vitesse de variation $V_i$ et de la valeur $p_i$ de la grandeur physique.
5) calculer $\Delta t$ conformément à l'étape f,
6) mettre à jour la valeur de chaque grandeur physique $P_i$ conformément à l'étape g,
7) calculer pour chaque grandeur physique dont on a déterminé un intervalle de temps $\Delta t_i$ égal à $\Delta t$, un nouveau secteur courant en fonction du signe de la vitesse de variation $V_i$,
8) déterminer parmi les capteurs contrôlant une grandeur physique $P_i$, pour laquelle on a calculé un nouveau secteur courant à l'étape précédente, les capteurs dont l'état associé au nouveau secteur courant est différent de l'état associé à l'ancien secteur courant,
9) mettre à jour les signaux d'état correspondant aux capteurs déterminés à l'étape précédente,
10) déclencher une temporisation dont la valeur initiale correspond à la valeur du temps d'attente choisie à l'étape 1 , et attendre la fin de cette temporisation avant de reprendre automatiquement le procédé à l'étape 3 .

Enfin la présente invention propose une application du procédé de simulation permettant de tester le fonctionnement d'un automatisme de commande qui pilote un processus industriel, selon laquelle on met en oeuvre les étapes suivantes :

A) simuler une première fois le processus industriel dans sa totalité avec un temps d'attente plus grand que le temps d'exécution estimé de l'automatisme de commande (1) afin de valider le séquencement logique des signaux de commande émis par ledit automatisme,

B) réitérer la simulation avec des temps d'attente de plus en plus petits, jusqu'à obtenir un temps d'attente minimum pour lequel l'automatisme de commande séquence correctement les signaux de commande.

Le procédé de simulation, peut-être appliqué à un automatisme de commande constitué par un automate programmable industriel. Dans ce cas, on choisit la valeur du temps d'attente à l'étape A, de manière à ce qu'il soit supérieur au temps de cycle automate.

D'autres caractéristiques et avantages de l'invention, ressortiront de la description suivante de modes particuliers de réalisation, donnée en référence aux dessins annexés sur lesquels:

- la figure 1 schématise un processus industriel qui reçoit des signaux de commande émis par un automatisme de commande et qui émet en retour des signaux d'état,
- la figure 2 représente un processus industriel particulier mis en oeuvre dans une installation industrielle comportant une cuve et un axe mécanique,
- les figures 3a et 3b sont des logigrammes d'état des signaux d'état en fonction de la position de l'axe mécanique et du niveau de liquide dans la cuve,
- et les figures 4a, 4b, 4c et 4d schématisent le processus industriel de la figure 2 à différents instants caractéristiques du procédé de simulation.

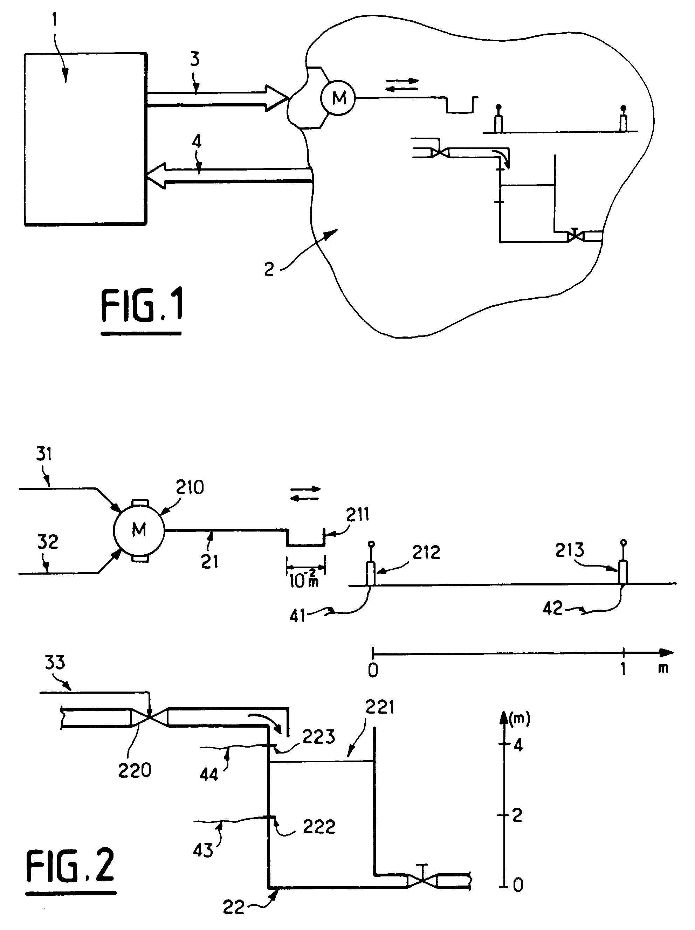

Si l'on se reporte à la figure 1, on voit que le procédé conformément à l'invention vise à simuler un processus industriel (2) qui réagit à des signaux de commande (3) émis par un automatisme de commande (1), en faisant varier des grandeurs physiques caractéristiques de son état, et qui rend compte de son état audit automatisme par l'intermédiaire de signaux d'état (4).

Un dispositif de mise en oeuvre du procédé selon l'invention est un système informatique dont les entrées sont reliées aux sorties de l'automatisme de commande, et vice et versa. Un tel dispositif est déjà connu et ne fera pas l'objet d'une description plus détaillée. L'automatisme de commande (1) peut être soit à logique câblée, soit à logique programmée du type contrôleur programmable industriel, encore appelé automate programmable industriel. Cette automatisme de commande peut aussi être un système informatique simulant la logique de fonctionnement d'un automate programmable industriel ou d'une armoire à relais.

Les grandeurs physiques caractéristiques d'un processus industriel sont de natures très diverses. On peut citer comme grandeurs physiques sans que cela soit limitatif, la position d'un axe mécanique, le niveau de liquide dans une cuve, le degré de température dans un four , le niveau de la pression dans une chambre hermétique, la grandeur temporelle mise en oeuvre par exemple dans des temporisations, la vitesse de rotation d'un moteur ou enfin le poids d'un objet.

La figure 2 représente un processus industriel particulier mis en oeuvre dans une installation industrielle simple, qui comprend un axe mécanique (21), piloté par un moteur (210) et une cuve (22) dont le remplissage dépend de l'ouverture d'une vanne (220). Les grandeurs physiques caractéristiques de l'état de ce processus, sont la position de l'axe mécanique (21) qui est repérée par une came (211) de largeur $10^{-2}$ m et le niveau de liquide dans la cuve (22) qui est repéré par la position de la surface (221) du liquide.

Dans la suite de la description, on appelera $P_1$ la position de l'axe et $P_2$, le niveau de liquide. Conformément à l'invention, dans une première étape on définit un modèle fonctionnel du contrôle du processus (étape a). Pour cela, selon un mode particulier de réalisation, on commence par définir les capteurs qui contrôlent chaque grandeur physique (étape a(j)).

Ainsi pour le processus particulier de la figure 2 le contrôle de la position de l'axe mécanique est réalisé à l'aide des capteurs (212) et (213) et le contrôle du niveau de liquide dans le cuve, à l'aide des capteurs (222) et (223).

Ensuite on associe les capteurs (212), (213), (222) et (223) aux signaux d'état qu'ils délivrent (étape a(jj)) et qui sont respectivement les signaux (41), (42), (43) et (44).

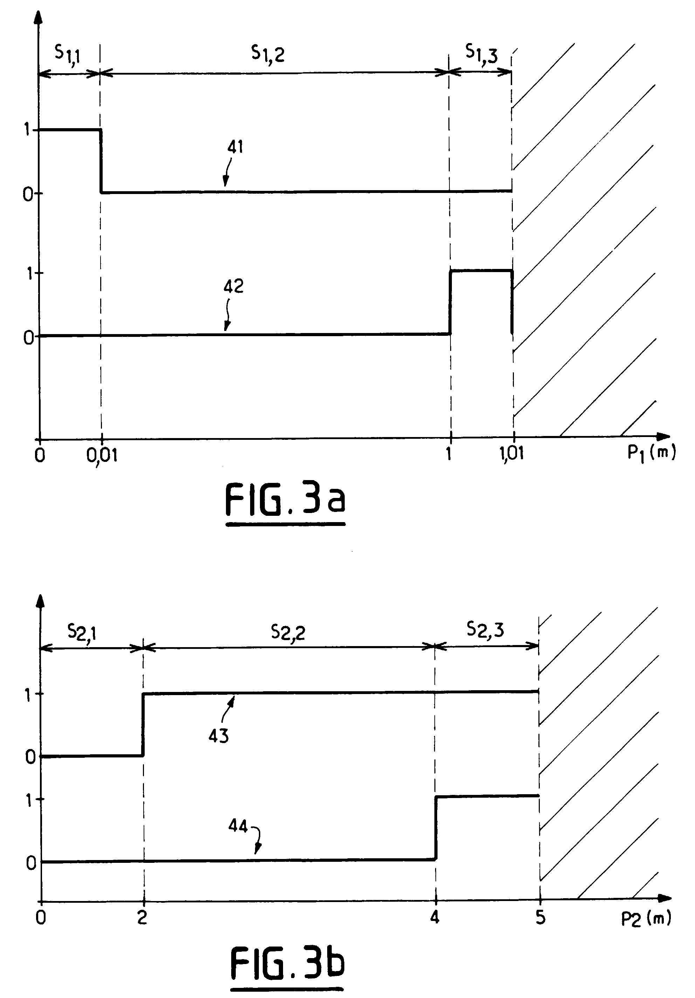

Les capteurs qui contrôlent le processus, ont une position fixe dans l'installation industrielle. De cette position et de la largeur de la came (211), on peut déduire facilement les logigrammes des figures 3a et 3b qui représentent l'état respectivement des signaux (41), (42), et des signaux (43) et (44) en fonction de la valeur en mètre des grandeurs physiques $P_1$ et $P_2$. A partir des logigrammes de la figure 3a, on peut facilement repérer les plages de variation de la grandeur physique $P_1$, pendant lesquelles les capteurs (212) et (213) ne changent pas d'état. De même les logigrammes de la figure 3b font apparaître lesdites plages de variation de la grandeur physique $P_2$ pendant lesquelles les capteurs (222) et (223) ne changent pas d'état.

Ainsi on décompose la plage de variation de la grandeur physique $P_1$ en la succesion de secteurs contigus $S_{1,1}$ , $S_{1,2}$ et $S_{1,3}$ , et la plage de variation de la grandeur physique $P_2$, en la succession de secteurs contigus , $S_{2,1}$ , $S_{2,2}$ et $S_{2,3}$ (étape a(jjj)).

Ensuite, on associe au secteur $S_{1,1}$ une borne inférieure qui est 0, une borne supérieure qui est 0.01, l'état du capteur (212) qui vaut 1, et l'état du capteur (213) qui vaut 0. On procède de même pour chacun des secteurs de la grandeur physique $P_1$. Ensuite on associe au secteur $S_{2,1}$ une borne inférieure qui est 0 , une borne supérieure qui est 2, l'état du capteur (221) qui vaut 0 et l'état du capteur (223) qui vaut 0 .

On procéde de même pour chacun des secteurs de la grandeur physique $P_2$. (étape a(jjj)).

Il résulte de cette succession d'étapes, un modèle fonctionnel du contrôle du processus. Ce modèle peut être décrit dans un fichier informatique dit fichier de contrôle :

<u>FICHIER DE CONTROLE</u>

-   Première grandeur physique : $P_1$

    -   premier capteur : (212)

        -   signal d'état : (41)

    -   deuxième capteur : (213)

        -   signal d'état : (42)

    -   premier secteur : $S_{1,1}$

        -   borne inférieure : 0
        -   borne supérieure : 0.01
        -   état :

            -   premier capteur : 1
            -   deuxième capteur :0

    -   deuxième secteur : $S_{1,2}$

        -   borne inférieure : 0.01
        -   borne supérieure : 1
        -   état :

            -   premier capteur : 0
            -   deuxième capteur :0

    -   troisième secteur : $S_{1,3}$

        -   borne inférieure : 1
        -   borne supérieure : 1.01
        -   état :

            -   premier capteur : 0
            -   deuxième capteur :1

-   Deuxième grandeur physique : $P_2$

    -   premier capteur : (222)

        -   signal d'état : (43)

    -   deuxième capteur : (223)

        -   signal d'état : (44)

    -   premier secteur : $S_{2,1}$

        -   borne inférieure : 0
        -   borne supérieure : 2
        -   état :

            -   premier capteur : 0
            -   deuxième capteur :0

    -   deuxième secteur : $S_{2,2}$

        -   borne inférieure : 2
        -   borne supérieure : 4
        -   état :

            -   premier capteur : 1
            -   deuxième capteur: 0

    -   troisième secteur : $S_{2,3}$

        -   borne inférieure : 4
        -   borne supérieure : 5
        -   état :

            -   premier capteur : 1
            -   deuxième capteur: 1

Ce fichier contient, selon le mode de réalisation particulier toutes les données relatives au fonctionnement du contrôle du processus industriel que l'on doit simuler. Ces données seront utilisées ultérieurement pour simuler l'évolution du processus industriel. Dans un mode de réalisation équivalent, on pourrait se contenter de spécifier, pour chaque secteur, dans le modèle fonctionnel du contrôle du processus, exclusivement les capteurs actifs (respectivement inactifs), un capteur non spécifié, pour un secteur donné, étant par déduction inactif (respectivement actif).

Dans une deuxième étape, on définit un modèle fonctionnel de la commande du processus (étape b).
Si on se référe à la figure 2, on voit que la commande du processus industriel (2) comprend un moteur (210) pour l'entraînement de l'axe mécanique et d'une vanne (220) pour la commande du remplissage de la cuve. Le moteur (210) qui permet de piloter le mouvement de l'axe mécanique (21) et donc de faire varier la grandeur physique $P_1$ est commandé par l'automatisme de commande (1) par l'intermédiaire des signaux de commande (31) et (32). De même, l'ouverture de la vanne (220) qui permet de remplir la cuve (22), et donc de faire varier la grandeur physique $P_2$, est commandée par ledit automatisme, à l'aide du signal de commande (33).

Selon un deuxième mode particulier de réalisation, on associe à la grandeur physique $P_1$, les signaux de commande (31) et (32), et à la grandeur physique $P_2$, le signal de commande (33) (étape b(j)).

Selon que le signal de commande (31) ou que le signal de commande (32) est actif, c'est à dire lorsque leur état vaut 1, le moteur (210) fait se déplacer l'axe mécanique (21) vers la droite à une vitesse de 0.05 ms, ou vers la gauche avec la même vitesse. Lorsque les signaux (31) et (32) sont inactifs, le moteur (210) est à l'arrêt, l'axe mécanique (21) est donc immobile. De même, si le signal (33) est actif, la vanne (220) est ouverte et la cuve (22) se remplit avec une vitesse de 1m/s . Si le signal (33) est inactif, la vanne est fermée et le remplissage de la cuve s'arrête

Ainsi on peut associer :

- au signal de commande (31), la vitesse de variation + 0.05 m/s ou 0 m/s selon que son état vaut 1 ou 0 ,
- au signal de commande (32), la vitesse de variation - 0.05 m/s ou 0 m/s selon que son état 1 ou 0 ,
- et au signal de commande (33), la vitesse de variation 1 m/s ou 0 m/s selon que son état vaut 1 ou 0 (étape b(jj)).

La différence de signe entre les vitesses associées aux états actifs des signaux de commande (31) et (32), s'explique par le fait que si le signal de commande (31) est actif la valeur de la grandeur physique $P_1$ augmente, alors que si le signal de commande (32) est actif, la valeur de la grandeur physique $P_1$ diminue. Il résulte de cette succession d'étapes un modèle fonctionnel de la commande du processus. Celui-ci peut être décrit dans un fichier informatique dit fichier de commande :

FICHIER DE COMMANDE

- première grandeur physique : $P_1$

    - premier signal de commande : (31)

        - vitesse état 0 : 0
        - vitesse état 1 : + 0.05 m/s

    - deuxième signal de commande : (32)

        - vitesse état 0 : 0
        - vitesse état 1 : - 0.05 m/s

- deuxième grandeur physique : $P_2$

    - premier signal de commande : (33)

        - vitesse état 0 : 0
        - vitesse état : 1 m/s

Une fois les modèles fonctionnels du contrôle et de la commande du processus définis, on peut démarrer la simulation du processus conformément à l'invention.

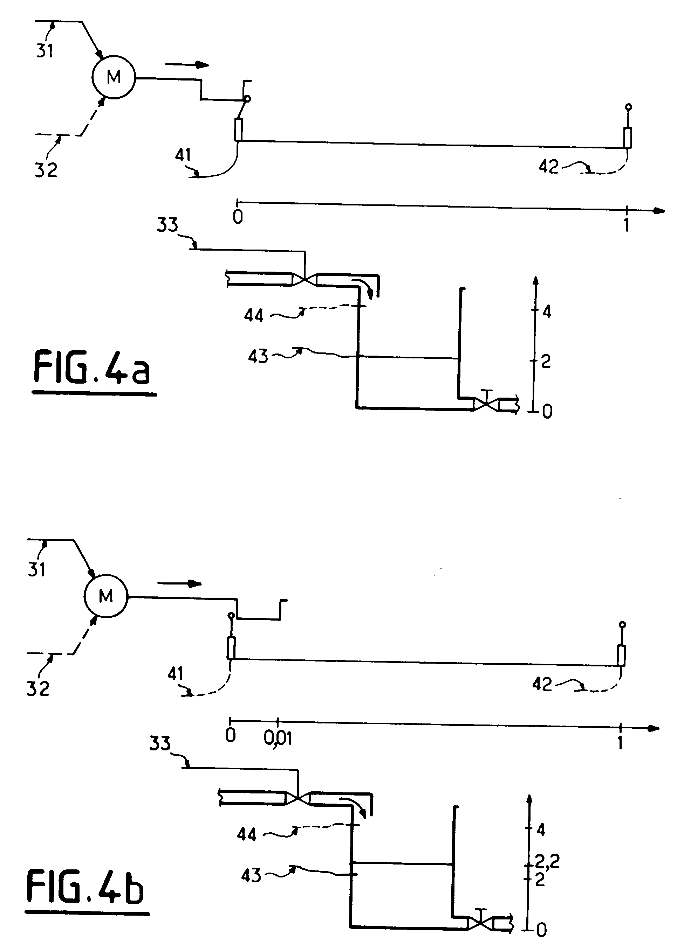

Pour cela, on doit initialiser le processus dont l'état initial est représenté à la figure 4a ; l'axe mécanique (21) étant en position 0, et la cuve (22) contenant un liquide dont le niveau est à 2 mètres, l'état des capteurs (212) et (222) vaut 1 alors que l'état des capteurs (213) et (223) vaut 0 et les valeurs des grandeurs physiques $P_1$ et $P_2$ sont respectivement 0 et 2 mètres.

L'état des capteurs et les valeurs de $P_1$ et $P_2$, permettent de dire que la valeur de la grandeur physique $P_1$ est située dans la plage de variation correspondant au secteur $S_{1,1}$ et que la valeur de la grandeur physique $P_2$ est située dans la plage de variation correspondant au secteur $S_{2,2}$, $S_{1,1}$ et $S_{2,2}$ étant définis précédemment. Ainsi on définit pour $P_1$ un secteur courant $S_1$ qui est le secteur $S_{1,1}$ et pour $P_2$ un secteur courant $S_2$ qui est le secteur $S_{2,2}$, et on initialise la valeur $p_1$ de la grandeur physique $P_1$ à 0 mètre et la valeur $p_2$ de la grandeur physique $P_2$ à 2 mètres (étape 2). A ce stade de la simulation on a donc :

- pour la grandeur physique $P_1$

    $p_1 = 0$ m
    $S_1 = S_{1,1}$
    valeur du signal d'état (41) = 1
    valeur du signal d'état (42) = 0

- pour la grandeur physique $P_2$

    $p_2 = 2$ m
    $S_2 = S_{2,2}$
    valeur du signal d'état (43) = 1
    valeur du signal d'état (44) = 0

L'étape suivante conformément à l'invention consiste à calculer pour chacune des grandeurs physiques $P_1$ et $P_2$ des vitesses de variation, appelées respectivement $V_1$ et $V_2$ (étape 3). Cette étape est la première étape d'une boucle itérative.

Si l'on se réfère à la figure 4a, on remarque que les signaux de commande (31) et (33) schématisés par des flèches en trait plein sont actifs alors que le signal de commande (32) schématisé par une flèche en pointillé est inactif. Conformément à ce qui a été décrit, dans la partie de la description concernant la commande du processus et compte tenu de l'état des signaux de commande (31), (32) et (33) on déduit facilement que $V_1$ vaut + 0.05 m/s et $V_2$ vaut 1m/s. En effet, pour obtenir $V_1$, il suffit d'additionner la vitesse correspondant à l'état actif du signal de commande (31), et la vitesse correspondant à l'état inactif du signal de commande (32) , ces vitesses ayant été spécifiées dans le fichier de commande conformément au deuxième mode particulier de réalisation. De même $V_2$ est la vitesse correspondant à l'état actif du signal de commande (33).

Ensuite on détermine pour la grandeur physique $P_1$ (respectivement pour $P_2$) l'intervalle de temps $\Delta t_1$ (respectivement $\Delta t_2$) qui correspond à l'intervalle de temps pendant lequel la grandeur physique $P_1$ (respectivement $P_2$) peut varier sans que l'un des capteurs (212) et (213) (respectivement (222) et (223)) change d'état

Conformément au premier mode particulier de réalisation, $\Delta t_1$ correspond au temps nécessaire au processus pour faire varier la valeur $p_1$ de la grandeur physique $P_1$ de telle sorte que $p_1$ devienne égale soit à la borne supérieure du secteur courant $S_1$ si la vitesse de variation $S_1$ est positive, soit à la borne inférieure du secteur courant $S_1$, si la vitesse de variation est négative.
Ainsi si $V_1$ est négative,

$$\Delta t_1 = \frac{(\text{borne inférieure de } S_1) - p_1}{V_1}$$

et si $V_1$ est positive,

$$\Delta t_1 = \frac{(\text{borne supérieure de } S_1) - p_1}{V_1}$$

Etant donné que $V_1$ est positive, que $p_1$ vaut 0 , et que le secteur courant de la grandeur physique $P_1$ est le secteur $S_{1,1}$, qui a pour borne supérieure 0.01, on trouve que $\Delta t_1$ vaut 0.2 s.

De même étant donné que $V_2$ est positive et vaut 1m/s, que $P_2$ vaut 2m, et que le secteur courant de $P_2$ est le secteur $S_{2,2}$ qui a pour borne supérieure 4 m on trouve que $\Delta t_2$ vaut 2s.

On calcule alors l'intervalle de temps $\Delta t$ qui est le plus petit des intervalles de temps $\Delta t_1$ et $\Delta t_2$ (étape 5). Ainsi on trouve que $\Delta t$ vaut $\Delta t_1$, soit 0.2 s.

On met alors à jour la valeur de la grandeur physique $P_1$ (respectivement $P_2$) en l'incrémentant de la valeur du produit de t et de $V_1$ (respectivement $V_2$), (étape 6).
Ainsi $p_1$ qui valait 0 m, après un intervalle de temps $\Delta t$ de 0.2 s, vaut 0.01 m et $p_2$ qui valait 2m, vaut 2.2 m. Le nouvel état du processus industriel est représenté à la figure 4b.

Conformément à l'invention, on calcule pour la grandeur physique $P_1$, un nouveau secteur courant. Ce secteur est choisi automatiquement parmi les secteurs $S_{1,1}$, $S_{1,2}$ et $S_{1,3}$ qui sont associés à la grandeur physique $P_1$, comme étant le secteur dont la borne soit inférieure, soit supérieure vaut $p_1$, selon que la vitesse de variation $V_1$ est positive ou négative. Ainsi dans le cas présent, le nouveau secteur courant de $P_1$, est le secteur qui a pour borne inférieure, la nouvelle valeur de la grandeur physique $P_1$, $V_1$ étant positive. Par conséquent le nouveau secteur courant de $P_1$ est le secteur $S_{1,2}$ (étape 7).
Ainsi pour la grandeur physique $P_1$ on a :

$p_1 = 0.01$ m
$S_1 = S_{1,2}$

et pour la grandeur physique $P_2$ on a

$P_2 = 2.2$ m
$S_2 = S_{2,2}$

On détermine ensuite, parmi les capteurs (212) et (213), les capteurs dont l'état associé au nouveau secteur courant $S_1$ est différent de l'état associé à l'ancien secteur courant (étape 8). Dans le fichier de contrôle, on voit que l'état du capteur (213) associé au secteur $S_{1,1}$ est identique à l'état associé au secteur $S_{1,2}$ et vaut 0 alors que l'état du capteur (212) associé au secteur $S_{1,1}$ est différent de celui associé au secteur $S_{1,2}$. On en déduit que seul le capteur (212) change d'état en devenant inactif, et on modifie en conséquence le signal d'état (41) qui lui est associé dans le fichier de contrôle et qui vaut maintenant 0 (étape 9).
Quant aux deux capteurs (222) et (223), ils ne changent pas d'état car l'intervalle de temps $\Delta t$ est strictement inférieur à l'intervalle de temps $\Delta t_2$.

A ce stade du procédé de simulation on a :

- pour la grandeur physique $P_1$ :

    $p_1 = 0.01$ m
    $S_1 = S_{1,2}$
    $V_1 = + 0.05$ m/s
    valeur du signal d'état (41) = 0
    valeur du signal d'état (42) = 0

- pour la grandeur physique $P_2$

    $p_2 = 2.2$ m
    $S_2 = S_{2,2}$
    $V_2 = + 1$ m/s
    valeur du signal d'état (43) = 1
    valeur du signal d'état (44) = 0

L'automatisme de commande (1) est alors informé du changement d'état du signal d'état (41).

On marque alors une pause dans le procédé de simulation, en déclenchant une temporisation (étape 10) afin de laisser le temps à l'automatisme de commande, de calculer s'il y a lieu de nouveaux signaux de commande (31), (32) ou (33). Le choix de la valeur de la temporisation (étape 1) joue un rôle important dans l'utilisation du procédé de simulation pour tester le fonctionnement d'un automatisme. Celle-ci sera décrite ultérieurement.

Quand la temporisation, qui est généralement de l'ordre de quelques dizaines de millisecondes touche à sa fin, ce qui marque la fin de la première itération, on reprend le procédé tel que décrit à partir du calcul des vitesses de variation $V_1$ et $V_2$ ; ce qui correspond à la première étape de la boucle itérative précitée.

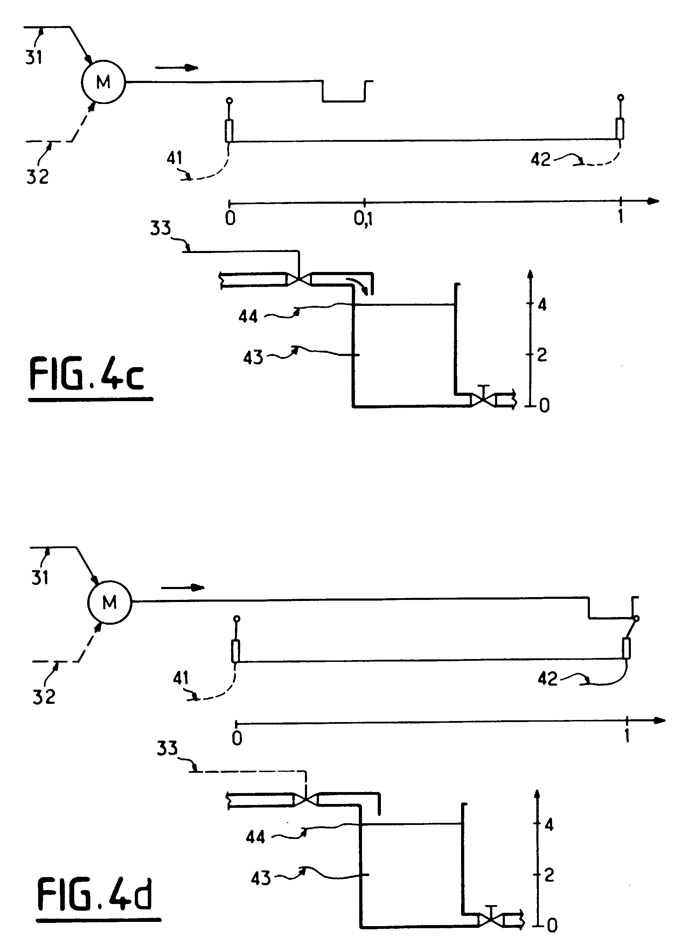

Les figures 4c, et 4d, montrent l'évolution du processus après une deuxième et une troisième itération. A la deuxième itération, on voit sur la figure 4c que les signaux de commande (31), (32) et (33) n'ont pas changé d'état. On a donc toujours :

$V_1 = + 0.05$ m/s et $V_2 = + 1$ m/s.

En appliquant le procédé de simulation tel que décrit précédemment, on trouve alors :

$\Delta t_1 = 19.8$s ; $\Delta t2 = 1.8$ s ; $\Delta t = \Delta t2 = 1.8$ s.

on en déduit les nouvelles valeurs de $P_1$ et $P_2$ suivantes :

$p_1 = 0.1$ m ; $p_2 = 4$m.

Seul le capteur (223) change d'état en devenant actif ; on a alors la valeur des signaux d'état (41) (42) et (43) qui est inchangée. Quant au signal d'état (44), il est à présent actif.

Si on se reporte maintenant à la figure 4d, on voit que l'automatisme de commande, suite au changement d'état de signal (44), a changé la valeur du signal de commande (33) en le désactivant, ce qui a pour effet d'arrêter le remplissage de la cuve (22) en fermant la vanne (220).

La troisième itération du procédé de simulation conduit alors à faire évoluer le processus industriel vers un nouvel état qui est représenté à la figure 4d ; l'intervalle de temps $\Delta t$ correspondant à cette nouvelle itération valant 18 s.

Ainsi par itérations successives, on peut simuler le processus industriel dans sa totalité en fonction des signaux de commande (3) émis par l'automatisme de commande (1).

L'avantage d'un tel procédé de simulation est de simuler le processus en accéléré, et non pas en temps réel, tout en gardant une trace de ce temps réel par l'intermédiaire de la valeur de l'intervalle de temps $\Delta t$ à chaque itération.

Les deux modes particuliers de réalisation des modèles fonctionnels de la commande et du contrôle du processus, permettent de réaliser automatiquement le procédé. Tout autre procédé de modélisation de la commande et du contrôle du processus visant à obtenir le même résultat, et permettant notamment un calcul automatique de l'intervalle de temps $\Delta t$, ne sortirait pas du cadre de l'invention.

D'autre part le procédé de simulation selon ses modes particuliers de réalisation, peut facilement être mis en oeuvre par des moyens informatiques tels qu'un microcalculateur personnel relié à un automatisme de commande. En outre, ces moyens informatiques peuvent avantageusement être aussi aptes à simuler la logique de fonctionnement de l'automatisme de commande du processus.

Une autre caractéristique importante du procédé selon l'invention est le choix d'une valeur de temporisation que l'on a appelée temps d'attente. La description qui va suivre a pour but de montrer une application du procédé pour valider le fonctionnement d'un automatisme de commande, qui peut être soit à logique cablée soit à logique programmée, en utilisant la caractéristique précitée.

En effet, supposons que l'automatisme de commande (1), soit un automate programmable industriel, dont le programme est conçu de telle sorte qu'en fonction des signaux d'état (41) (42) (43) (44), il calcule les signaux de commande (31) (32) (33). Il est intéressant de détailler ce qui se passe si l'on simule le processus industriel vis à vis de l'automate, avec un temps d'attente inférieur à un cycle d'automate. En effet, si on applique le procédé de simulation précédemment décrit, avec un temps d'attente nul, les deux premières itérations ne sont pas altérées car les signaux de commande (31) (32) et (33) ne changent pas. En revanche, à la troisième itération, du fait d'un temps d'attente nul, l'automate n'a pas le temps de désactiver le signal de commande (33), afin d'arrêter le remplissage de la cuve. On en conclut, que $p_2$ ne vaut alors plus 4 m à la fin de la troisème iteration, mais vaut 22m ; la cuve continuant à se remplir à la vitesse de 1 m/s. Cette caractéristique du procédé de simulation conduit à spécifier un temps d'attente, dont la valeur, lorsque l'automatisme de commande est un automate programmable industriel, doit être au moins de un cycle d'automate. En effet, pendant ce cycle, l'automate lit toutes ses entrées, ce qui correspond à une prise en compte des signaux d'état (4), puis effectue le calcul de ses sorties à partir de ses entrées et de bits internes, et enfin rafraichit l'état de ses sorties ; ce qui correspond à l'émission des signaux de commande (3). Il faut donc au moins un cycle pour que l'automate prenne en compte le dernier changement du signal d'état (44), afin de mettre à jour le signal de commande (33) qui arrête le remplissage de la cuve.

Ainsi pour tester le fonctionnement d'un automate programmable industriel, on simule dans un premier temps (étape A) le processus industriel (2) qu'il pilote, avec un temps d'attente, plus important que son temps de cycle. A titre indicatif, on choisit un temps d'attente qui équivaut à cinq fois le temps de cycle automate.

Ainsi dans le cas présent, on laisse le temps à l'automate à la troisième itération, de calculer un nouveau signal de commande (33). En analysant à chaque itération successive les signaux de commande émis par l'automate, on valide le séquencement logique desdits signaux.

Une fois cette validation effectuée, dans un deuxième temps (étape B) , on réitère plusieurs fois la simulation globale du processus, mais avec des temps d'attente de plus en plus petits, jusqu'à l'observation d'une différence dans le séquencement des signaux de commande . Ainsi dans le cas du remplissage de la cuve, cette divergence apparaît lorsque le signal de commande (33) n'est pas désactivé à temps. On peut alors déterminer un temps d'attente minimum, qui correspond au temps de calcul maximum de l'automate

Ce temps d'attente minimum dépend évidement de l'automate et de son temps de cycle, mais aussi de la structure du programme, notamment dans la gestion des bits internes intervenant dans les calculs intermédiaires. Il ressort de cette description que le temps d'attente est dans le meilleur des cas un cycle automate.

Dans certaines applications industrielles, ce renseignement sur le temps de calcul réel de l'automate peut avoir une importance capitale, soit au regard de la sécurité, soit au regard de la précision du processus industriel mis en oeuvre.

L'application particulière de cette utilisation du procédé de simulation pour tester le fonctionnement d'un automate programmable est donnée à titre indicatif. On peut de la même manière utiliser le procédé pour valider le fonctionnement de tout automatisme de commande, en choisissant pour valeur initiale du temps d'attente à l'étape A, un temps supérieur au temps estimé d'exécution de l'automatisme de commande.

Il apparaît donc que le procédé de simulation et son utilisation selon l'invention trouvent leur application dans l'étape importante de l'automatisation d'installations industrielles, qui consiste à certifier la conformité de l'automatisme avec le cahier de charges de l'installation. Ils permettent en effet, dans un premier temps de valider le fonctionnement logique de l'automatisme avant la mise en oeuvre du processus industriel et dans un deuxième temps, de quantifier le temps d'exécution de l'automatisme ; ce qui permet de certifier le respect des contraintes temporelles liées à une installation industrielle donnée.

**Revendications**

1. Procédé de simulation d'un processus industriel (2) qui fait varier la valeur de chaque grandeur physique caractéristique de son état, en fonction de l'état des signaux de commande (3) émis par un automatisme de commande (1) et qui rend compte de son état audit automatisme par l'intermédiaire de signaux d'état (4) émis par des capteurs en fonction de la valeur de la grandeur physique qu'ils contrôlent, caractérisé en ce qu'il comprend les étapes suivantes :

   a) définir un modèle fonctionnel du contrôle du processus industriel en fixant pour chaque grandeur physique $P_i$ l'état de chaque capteur contrôlant $P_i$ en fonction de la valeur de $P_i$,
   b) définir un modèle fonctionnel de la commande du processus en fixant pour chaque grandeur physique $P_i$ sa vitesse de variation $V_i$ en fonction de l'état du ou des signaux de commande faisant varier $P_i$,
   c) initialiser le processus industriel,
   d) calculer à l'aide du modèle fonctionnel de la commande du processus , pour chaque grandeur physique $P_i$, la vitesse de variation $V_i$ qui est fonction de l'état des signaux de commande (3),
   e) déterminer à l'aide du modèle fonctionnel du contrôle du processus, pour chaque grandeur physique $P_i$ dont la vitesse de variation n'est pas nulle, l'intervalle de temps $\Delta t_i$ pendant lequel la valeur de la grandeur physique peut varier sans que l'un quelconque des capteurs contrôlant cette grandeur $P_i$ change d'état,
   f) calculer l'intervalle de temps $\Delta t$, défini comme étant le plus petit des intervalles de temps $\Delta t_i$ déterminés à l'étape précédente,
   g) mettre à jour la valeur de chaque grandeur physique $P_i$ en l'incrémentant de la valeur du produit de la vitesse de variation $V_i$ par l'intervalle de temps $\Delta t$,
   h) déterminer en fonction de la valeur des grandeurs physiques mises à jour à l'étape précédente, les capteurs qui changent d'état , et mettre à jour les signaux d'état correspondants,
   i) attendre un laps de temps , dit temps d'attente , dont la valeur est paramétrable, avant de recommencer le procédé à l'étape d).

2. Procédé de simulation selon la revendication 1 caractérisé en ce qu'il consiste à décomposer l'étape a) en la succession d'étapes suivantes :

   j) définir les capteurs qui contrôlent chaque grandeur physique,
   jj) associer à chaque capteur un signal d'état,
   jjj) décomposer la plage de variation de chaque grandeur physique $P_i$ en une succession de secteurs contigus, chaque secteur $S_{i,j}$ correspondant à une plage de variation de la grandeur physique $P_i$ pendant laquelle aucun capteur contrôlant la grandeur $P_i$ ne change d'état,
   jjjj) associer à chaque secteur $S_{i,j}$ une borne inférieure, une borne supérieure, et les états des capteurs contrôlant la grandeur $P_i$.

3. Procédé de simulation selon la revendication 1 ou la revendication 2 caractérisé en ce qu'il consiste à décomposer l'étape b) en la succession d'étapes suivantes :

   j) associer à chaque grandeur physique $P_i$ les signaux de commande qui font varier la valeur de la grandeur $P_i$,
   jj) associer à chaque signal de commande défini en (j), une vitesse de variation de la grandeur $P_i$ en fonction de l'état binaire dudit signal de commande.

4. Procédé de simulation selon les revendications 2 et 3 caractérisé en ce que les étapes c à i, sont effectuées automatiquement à l'aide de la succession des étapes suivantes :

   1) choisir une valeur pour le temps d'attente,
   2) choisir pour chaque grandeur physique $P_i$ un secteur courant $S_i$, parmi les secteurs qui composent la plage de variation de la grandeur $P_i$ et initialiser une valeur $p_i$ qui est comprise entre les bornes du secteur courant $S_i$,

3) calculer pour chaque grandeur physique $P_i$ une vitesse de variation $V_i$ à partir des vitesses de variation associées conformément à l'étape b (jj), à chaque signal de commande en fonction de son état,

4) déterminer pour chaque grandeur physique $P_i$, l'intervalle de temps $\Delta t_i$ en fonction des bornes du secteur courant $S_i$, de la vitesse de variation $V_i$ et de la valeur $p_i$ de la grandeur physique,

5) calculer $\Delta t$ conformément à l'étape f,

6) mettre à jour la valeur de chaque grandeur physique $P_i$ conformément à l'étape g),

7) calculer pour chaque grandeur physique dont on a déterminé un intervalle de temps $\Delta t_i$ égal à $\Delta t$, un nouveau secteur courant en fonction du signe de la vitesse de variation $V_i$,

8) déterminer parmi les capteurs contrôlant une grandeur physique $P_i$ pour laquelle on a calculé un nouveau secteur courant à l'étape précédente, les capteurs dont l'état associé au nouveau secteur courant est différent de l'état associé à l'ancien secteur courant,

9) mettre à jour les signaux d'état correspondant aux capteurs déterminés à l'étape précédente,

10) déclencher une temporisation dont la valeur initiale correspond à la valeur du temps d'attente choisie à l'étape 1, et attendre la fin de cette temporisation avant de reprendre automatiquement le procédé à l'étape 3,

5. Procédé de simulation selon l'une quelconque des revendications 1 à 4, pour tester le fonctionnement d'un automatisme de commande (1) pilotant un processus industriel (2), caractérisé en ce que l'on met en oeuvre les étapes suivantes :

A) simuler une première fois le processus industriel (2) dans sa totalité avec un temps d'attente plus grand que le temps d'exécution estimé de l'automatisme de commande (1) afin de valider le séquencement logique des signaux de commande (3) émis par ledit automatisme,

B) réitérer la simulation avec des temps d'attente de plus en plus petits, jusqu'à obtenir un temps d'attente minimum pour lequel l'automatisme de commande séquence correctement les signaux de commande (3).

6. Procédé de simulation selon la revendication 5, appliqué à un automatisme de commande constitué par un automate programmable industriel , caractérisé en ce que le temps d'attente à l'étape A, est choisi de manière à ce qu'il soit supérieur au temps de cycle automate.

**Patentansprüche**

1. Verfahren zur Simulation eines industriellen Prozesses (2), der den Wert jeder seinen Zustand kennzeichnenden physikalischen Größe, in Abhängigkeit vom Zustand der Steuersignale (3) verändert, die durch einen Steuerautomatismus (1) ausgegeben werden, und der Auskunft über seinen Zustand an den besagten Automatismus über Zustandssignale (4) gibt, die von Meßfühlern in Abhängigkeit vom Wert der physikalischen Größe, die sie überwachen, ausgegeben werden,

**dadurch gekennzeichnet, daß**

es die folgenden Schritte umfaßt:

a) Definieren eines Funktionsmodells der Überwachung des industriellen Prozesses, wobei für jede physikalische Größe $P_i$ der Zustand von jedem Meßfühler, der $P_i$ in Abhängigkeit vom Wert von $P_i$ überwacht, festgehalten wird,

b) Definieren eines Funktionsmodells zur Steuerung des Prozesses, wobei für jede physikalische Größe $P_i$ ihre Änderungageschwindigkeit $V_i$ in Abhängigkeit vom Zustand des oder der Steuerungssignale, durch die $P_i$ geändert wird, festgehalten wird,

c) Initialisieren des industriellen Prozesses,

d) Berechnen der Geschwindigkeit der Änderung $V_i$, die von dem Zustand der Steuersignale (3) abhängt, für jede physikalische Größe $P_i$ mit Hilfe des Funktionsmodells zur Steuerung des Prozesses

e) Vorgeben des Zeitintervalls $\Delta t_i$, währenddessen der Wert der physikalischen Größe variieren kann, ohne daß einer der diese Größe $P_i$ überwachenden Meßfühler den Zustand ändert, für jede physikalische Größe $P_i$, deren Änderungsgeschwindigkeit nicht Null ist mit Hilfe des Funktionsmodells zur Überwachung des Prozesses,

f) Berechnen des Zeitintervalls $\Delta t$, das definitionsgemäß das kleinste der Zeitintervalle $\Delta t_i$ ist, die in dem vorangegangenen Schritt festgelegt wurden,

g) Aktualisieren des Wertes jeder physikalischen Größe $P_i$ durch Inkrementieren des Wertes des Produktes der Änderungsgeschwindigkeit $V_i$ mit dem Zeitintervall $\Delta t$,

h) Festlegen der Meßfühler, die den Zustand ändern in Abhängigkeit vom Wert der physikalischen Größen, die im vorangegangenen Schritt aktualisiert worden sind, und Aktualisieren der entsprechenden Zustandssignale,

i) Abwarten des Ablaufes einer gewissen Wartezeit genannten Zeit, deren Wert parametrisierbar ist, bevor das Verfahren mit Schritt d) erneut begonnen wird.

2. Verfahren zur Simulation nach Anspruch 1, dadurch gekennzeichnet, daß der Schritt a) in die Abfolge der folgenden Schritte unterteilt ist:

j) Definieren der Meßfühler, die jede physikalische Größe überwachen,

jj) Assoziieren eines Zustandssignals mit jedem Meßfühler,

jjj) Zerlegen der Variationsfläche jeder physikalischen Größe $P_i$ in die Abfolge von aneinanderhängenden Sektoren, wobei jeder Sektor $S_{i,j}$ einer Variationsfläche der physikalischen Größe $P_i$ entspricht, während welcher kein Meßfühler, der die Größe $P_i$ überwacht, den Zustand ändert,

jjjj) Assoziieren eines unteren Grenzwertes, eines oberen Grenzwertes und der Zustände der Meßfühler, die die Größe $P_i$ überwachen, mit jedem Sektor $S_{i,j}$.

3. Verfahren zur Simulation nach Anspruch 1 oder 2, dadurch gekennzeichnet, daß der Schritt b) in die Abfolge der folgenden Schritte unterteilt ist:

j) Assoziieren von Steuersignalen, die den Wert der Größe $P_i$ variieren lassen, mit jeder physikalischen Größe $P_i$.

jj) Assoziieren einer Änderungsgeschwindigkeit der Größe $P_i$ in Abhängigkeit vom Binärzustand des besagten Steuersignals mit jedem in (j) definierten Steuersignal.

4. Verfahren zur Simulation gemäß den Ansprüchen 2 und 3, dadurch gekennzeichnet, daß die Schritte c bis i automatisch mit Hilfe der Abfolge der folgenden Schritte durchgeführt werden:

1) Auswahl eines Wertes für die Wartezeit,

2) Auswahl eines laufenden Sektors $S_i$ unter den Sektoren, die die Änderungsfläche der Größe $P_i$ bilden, für jede physikalische Größe $P_i$ und Initialisieren eines Wertes $p_i$, der zwischen den Grenzwerten des laufenden Sektors $S_i$ liegt,

3) Berechnen einer Änderungsgeschwindigkeit $V_i$ für jede physikalische Große $P_i$ ausgehend von Änderungsgeschwindigkeiten, die entsprechend dem Schritt b (jj) mit jedem Steuersignal in Abhängigkeit von seinem Zustand assoziiert sind,

4) Bestimmen des Zeitintervalls $\Delta t_i$ für jede physikalische Größe $P_i$ in Abhängigkeit von den Grenzwerten des laufenden Sektors $S_i$ für die Änderungsgeschwindigkeit $V_i$ und den Wert $p_i$ der physikalischen Größe,

5) Berechnen von $\Delta t$ entsprechend dem Schritt f,

6) Aktualisieren des Wertes jeder physikalischen Größe $P_i$ entsprechend dem Schritt g),

7) Berechnen eines neuen laufenden Sektors für jede physikalische Größe, für die ein Zeitintervall $\Delta t_i$ in der Größe von $\Delta t$ festgelegt ist, in Abhängigkeit vom Vorzeichen der Änderungsgeschwindigkeit $V_i$,

8) Bestimmen unter den Meßfühlern, die eine physikalische Größe $P_i$ überwachen, für welche man einen neuen laufenden Sektor im vorangegangenen Schritt berechnet hat, der Meßfühler, deren Zustand mit dem neuen laufenden Sektor assoziiert ist und sich unterscheidet vom Zustand, der mit dem alten laufenden Sektor assoziiert ist,

9) Aktualisieren der Zustandssignale, die den Meßfühlern entsprechen, die im vorangegangenen Schritt festgelegt wurden,

10) Auslösen eines Wartezustandes, dessen ursprünglicher Wert dem Wert der Wartezeit entspricht, der im Schritt 1 gewählt wurde, und Abwarten des Endes dieses Wartezustandes, bevor automatisch das Verfahren im Schritt 3 wiederaufgenommen wird.

5. Verfahren zur Simulation nach einem der Ansprüche 1 bis 4 zum Testen der Funktion eines Steuerautomatismus (1), der einen industriellen Prozeß (2) überwacht, dadurch gekennzeichnet, daß die folgenden Schritte durchgeführt werden:

(A) Simulieren zunächst des industriellen Prozesses (2) in seiner Gesamtheit, mit einer Wartezeit, die größer als die abgeschätzte Ausführungszeit des Steuerautomatismus (1) ist, um die logische Abfolge der Steuersignale (3) sicherzustellen, die durch den besagten Automatismus ausgegeben werden,

(B) Wiederholen der Simulation mit Wartezeiten, die nach und nach kleiner werden, bis eine minimale Wartezeit erreicht ist, für welche der Steuerautomatiemus die Steuersignale (3) korrekt abarbeitet.

**6.** Verfahren zur Simulation nach Anspruch 5, angewendet auf einen Steuerautomatismus, der von einem programmierbaren industriellen Automaten gebildet wird, dadurch gekennzeichnet, daß die Wartezeit bei Schritt A so gewählt ist, daß sie größer als der Automatenzyklus ist.

**Claims**

**1.** Simulation method for simulating an industrial process (2) that causes the value of each physical magnitude characteristic of the state thereof to vary as a function of the state of control signals (3) emitted by an automatic controller (1), and that reports its state to said controller by means of state signals (4) emitted by sensors as a function of the values of the respective physical magnitudes that they monitor, characterized in that the method comprises the following steps:

    a) defining a functional model for monitoring the industrial process by setting, for each physical magnitude $P_i$, the state of each sensor monitoring $P_i$ as a function of the value $P_i$;

    b) defining a functional model of the process control by setting, for each physical magnitude $P_i$, the rate of change $V_i$ as a function of the state of the control signal(s) causing $P_i$ to vary;

    c) initializing the industrial process;

    d) calculating with the functional model of the process control, for each physical magnitude $P_i$, the rate of change $V_i$ which is a function of the state of the control signals (3);

    e) determining with the functional model of the process control, for each physical magnitude $P_i$ whose rate of change is not zero, the time interval $\Delta t_i$ during which the value of the physical magnitude can vary without any of the sensors monitoring said magnitude $P_i$ changing state;

    f) calculating the time interval $\Delta t$ which is defined as the shortest of the time intervals $\Delta t_i$ determined in the preceding step;

    g) updating the value of each of the physical magnitudes $P_i$ incrementing each of them with the value of the product of the time interval $\Delta t$ multiplied by the corresponding rate of change $V_i$;

    h) determining as a function of the values of the physical magnitudes updated in the preceding step, which sensors change state, and updating the corresponding state signals;

    i) waiting for a time lapse referred to as the waiting time, the value of which is parameterizable, prior to repeating the method from step d).

**2.** Simulation method according to claim 1, characterized in that step a) is split up into the following sequence of steps:

    j) defining which sensors monitor each physical magnitude;

    jj) associating each sensor with a state signal;

    jjj) splitting up the range over which each physical magnitude $P_i$ can vary into a succession of contiguous sectors, each sector $S_{i,j}$ corresponding to a range of change of the physical magnitude $P_i$ during which none of the sensors monitoring the magnitude $P_i$ changes state;

    jjj) associating each of the sectors $S_{i,j}$ with a bottom limit and a top limit, and also with the corresponding states of the sensors monitoring the magnitude $P_i$.

**3.** Simulation method according to claim 1 or claim 2, characterized in that it consists in splitting up b) into the following sequence of steps:

    j) associating each physical magnitude $P_i$ with the control signals that cause the value of the magnitude $P_i$ to vary.

    jj) associating each of the control signals defined in (j) with a rate of change for the magnitude $P_i$ as a function of the binary state of said control signal.

**4.** Simulation method according to claims 2 and 3, characterized in that steps c) to i) are performed automatically using the following sequence of steps:

    1) selecting a value for the waiting time;

    2) selecting for each physical magnitude $P_i$ a current sector $S_i$ selected from the sectors that make up the range of variation in the magnitude $P_i$, and initializing a value $P_i$ lying within the limits of the current sector $S_i$;

    3) calculating the rate of change $V_i$ for each physical magnitude $P_i$ on the basis of the rates of change associated in step b(jj) in compliance with each control signal as a function of its state;

    4) determining, for each physical magnitude $P_i$, the time interval $\Delta t_i$ as a function of the limits of the current sector $S_i$, of the rate of change $V_i$ and of the value $P_i$ of the physical magnitude;

    5) calculating $\Delta t$ in compliance with step f);

    6) updating the value of each physical magnitude $P_i$ in compliance with step g);

    7) calculating for each physical magnitude for which a time interval $\Delta t_i$ equal to $\Delta t$ has been

determined, a new current sector as a function of the sign of the corresponding rate of change $V_i$;

8) determining which sensors monitoring a physical magnitude $P_i$ for which a new current sector was calculated in the preceding step, has a state in the new current sector that is different from the state it had in the preceding current sector;

9) updating the state signals corresponding to the sensors whose states are determined in the preceding step;

10) starting a time delay whose initial value corresponds to the waiting time value selected in step 1), and waiting until the end of said time delay before automatically restarting the method at step 3.

5. Simulation method according to any one of claims 1 to 4, for testing the operation of an automatic controller (1) controlling an industrial process (2), characterized in that the following steps are implemented:

A) initially simulating the entire industrial process (2] with a waiting time that is greater than the estimated execution time of the automatic controller (1) so as to validate the logical sequencing of the control signals (3) emitted by said controller;

B) reiterating the simulation with smaller and smaller waiting times until a minimum waiting time is reached for which the automatic controller still sequences the control signals correctly.

6. Simulation method according to claim 5, applied to an automatic controller constituted by an industrial programmable controller, characterized in that the waiting time of step A) is selected in such a manner as to be greater than the cycle time of the controller.

## FIG.1

## FIG.2

## FIG.3a

## FIG.3b

FIG.4a

FIG.4b

FIG.4c

FIG.4d